(19) Europäisches Patentamt
European Patent Office
Office européen des brevets

(11) Veröffentlichungsnummer: **0 062 304**
**B1**

(12) # EUROPÄISCHE PATENTSCHRIFT

(45) Veröffentlichungstag der Patentschrift: **31.10.84**

(21) Anmeldenummer: **82102752.1**

(22) Anmeldetag: **01.04.82**

(51) Int. Cl.³: **C 09 B 67/20**, C 09 B 67/18, C 09 B 41/00, D 06 P 1/02, D 06 P 1/645

(54) **Verfahren zur Herstellung von Azopigmentpräparationen und ihre Verwendung.**

(30) Priorität: **07.04.81 DE 3113882**

(43) Veröffentlichungstag der Anmeldung: **13.10.82 Patentblatt 82/41**

(45) Bekanntmachung des Hinweises auf die Patenterteilung: **31.10.84 Patentblatt 84/44**

(84) Benannte Vertragsstaaten: **BE CH DE FR GB IT LI NL**

(56) Entgegenhaltungen:
**DE - A - 1 469 740**
**DE - A - 1 619 596**
**DE - B - 1 173 601**
**DE - C - 1 469 782**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Dopfer, Peter, Albert-Blank-Strasse 34a, D-6230 Frankfurt am Main 80 (DE)**
Erfinder: **Ostermeier, Johann, Dr., Nelkenweg 11, D-6238 Hofheim am Taunus (DE)**
Erfinder: **Schwerin, Siegfried, Dr., Frankfurter Strasse 33, D-6238 Hofheim am Taunus (DE)**

**EP 0 062 304 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Es wurden bereits Azopigmentpräparationen vorgeschlagen (DE-OS 3 104 257), die durch einen Gehalt an einem langkettigen aliphatischen primären Amin und einem Diamin der allgemeinen Formel I

$$H_2N-A-NH_2 \qquad (I)$$

in der A ein aliphatischer Kohlenwasserstoffrest mit 6 bis 30 C-Atomen ist, gekennzeichnet sind, sowie ein Verfahren zur Herstellung dieser Präparationen, das dadurch gekennzeichnet ist, daß man das langkettige aliphatische Amin und das Diamin vor, während oder nach der Kupplung zusetzt, weiterhin die Verwendung dieser Azopigmentpräparationen in Tiefdruckfarben.

Es wurde nun gefunden, daß man ebenfalls vorteilhafte Pigmentpräparationen erhält, wenn man das Diamin der Formel I durch ein Polyamin der Formel II

$$H_2N-(C_nH_{2n}-NH)_m-H \qquad (II)$$

in der n für gleiche oder verschiedene Zahlen von 2 bis 6 und m für eine Zahl von 2 bis 8 stehen, ersetzt und außerdem ein kationisches Hilfsmittel vom Typ der Phasentransferkatalysatoren zusetzt und mit diesen den Pigmentpreßkuchen präpariert.

Die Erfindung betrifft somit ein Verfahren zur Herstellung von Azopigmentpräparationen mit einem Gehalt an langkettigen aliphatischen primären Aminen und polyfunktionellen Aminen, das dadurch gekennzeichnet ist, daß man vor oder nach der Kupplung ein kationisches Hilfsmittel vom Typ der Phasentransferkatalysatoren und nach der Kupplung dem Kupplungsgemisch ein langkettiges primäres aliphatisches Amin zusetzt und nach dem Abtrennen des Pigments dem Preßkuchen ein Polyamin der Formel

$$H_2N-(C_nH_{2n}-NH)_m-H$$

in der n für gleiche oder verschiedene Zahlen von 2 bis 6 und m für Zahlen von 2 bis 8 stehen, zumischt.

Als Polyamine der Formel II kommen Verbindungen mit gleichen Alkylenresten in Betracht wie Diäthylentriamin, Triäthylentetramin, Pentaäthylenhexamin oder Dipropylentriamin, aber auch Verbindungen mit verschiedenen Alkylenresten, wie sie beispielsweise durch Anlagerung von Acrylnitril an Äthylendiamin, Butylendiamin oder Hexylendiamin und anschließende Hydrierung der Cyangruppen erhalten werden. Handelsüblich sind auch Gemische solcher Amine. Solche Handelsprodukte können auch geringe Mengen an Diaminen enthalten, die jedoch nicht stören.

Von der Verbindung der Formel II werden die niedermolekularen Verbindungen bevorzugt.

Als Azopigmente kommen alle in Tiefdruckfarben verwendeten Produkte in Betracht, insbesondere Pigmente der Acetoacetylarylamid-Reihe. Besonders bevorzugt sind Disazopigmente wie C. I. Pigment Yellow 12, 13, 14, 16, 17, 83, 106, 114, 126 und 127.

Es ist im allgemeinen vorteilhaft, als Fällungshilfsmittel der Kupplungskomponente einen Emulgator zuzusetzen. Als Emulgatoren kommen die hierfür üblicherweise eingesetzten Produkte in Betracht wie langkettige Aminoxide und Phosphinoxide, vorteilhaft jedoch Salze langkettiger Amine, da diese bei der alkalischen Behandlung in die Amine übergeführt werden, die dann als Präpariermittel wirken. Solche Emulgatoren sind beispielsweise aus den DE-AS 11 73 601 und 15 44 494 bekannt.

Als kationische Verbindungen vom Typ der Phasentransferkatalysatoren sind beispielsweise Stearyl-trimethyl-ammoniumchlorid oder Dodecyl-benzyl-dimethyl-ammoniumchlorid geeignet.

Die Emulgatoren und kationischen Verbindungen werden in praxisüblichen Mengen eingesetzt, also beispielsweise bis zu etwa 12% an Emulgator, bezogen auf das Gewicht der Kupplungskomponente, und bis zu etwa 8% an kationischer Verbindung, bezogen auf das Gewicht des Pigments. Vom langkettigen primären aliphatischen Amin werden bevorzugt 5 bis 40%, insbesondere 8 bis 30%, und vom Polyamin der Formel II 1 bis 15%, insbesondere 3 bis 10%, jeweils bezogen auf das Gewicht des Pigments, zugesetzt.

Das Mengenverhältnis des langkettigen aliphatischen primären Amins zum Diamin der Formel I kann in gewissen Grenzen schwanken und richtet sich nach den angestrebten Eigenschaften. Die günstigsten Relationen sind durch einfache Vorversuche leicht zu ermitteln.

Aus der DE-PS 21 21 673 ist es bekannt, durch Zusatz von Aralkyl-alkylenaminen Pigmentpräparationen zu erhalten, die Druckfarben liefern, welche beim Druck auf dünne und minderwertige Papiere nicht durchschlagen. Gegenüber diesen Präparationen zeigen die erfindungsgemäß erhaltenen Produkte eine verbesserte Dispergierbarkeit und erhöhte Farbstärke.

Gegenüber einer gemäß Beispiel 5 der DE-OS 14 69 740 hergestellten Azopigmentpräparation, enthaltend außer dem Pigment lediglich ein langkettiges primäres aliphatisches Amin und ein Polyamin (Diäthylentriamin), zeichnen sich die erfindungsgemäß erhältlichen Azopigmentpräparationen, jeweils angewandt in Form einer Illustrationstiefdruckfarbe, überraschenderweise durch höherer Farbstärke, besseren Glanz sowie durch ein geringeres Durchschlagen aus.

In den folgenden Beispielen beziehen sich Teile und Prozentangaben auf das Gewicht, sofern nichts anderes angegeben ist.

Beispiel 1

110 Teile 1-Acetoacetylaminobenzol werden in 1500 Teilen Wasser und 60 Volumenteilen 33%iger Natronlauge gelöst und nach Zugabe von 12 Teilen Oleylaminacetat mit 45 Volumenteilen Eisessig ausgefüllt. Zu dieser Suspension gibt man im Lauf einer Stunde bei Raumtemperatur eine Lösung von bis-diazotiertem 4,4'-Diamino-3,3'-dichlordiphenyl, die durch Zugabe von 120 Volumenteilen 5 N Natriumnitritlösung zu einem Gemisch von 76 Gewichtsteilen 4,4'-Diamino-3,3'-dichlordiphenyl, 300 Volumenteilen 5 N Salzsäure und 1000 Teilen Wasser hergestellt wurde. Der pH-Wert wird nach dem Absinken auf 4 bis 5 durch Zugabe verdünnter Natronlauge in diesem Bereich konstant gehalten.

Nach beendeter Kupplung gibt man zu dem Gemisch 9 Teile handelsübliches Kokosalkylbenzyl-dimethyl-ammoniumchlorid (Kokosalkyl steht für ein Gemisch von Alkylresten mit gerader Zahl von C-Atomen von 12 bis 18 und einem $C_{12}$-Anteil von etwa 50%) in Form einer 50%igen wäßrigen Lösung sowie 45 Teile Talgfettalkylpropylendiamin (Talgfettalkyl steht für ein Gemisch von Alkylresten folgender Verteilung: etwa 5% $C_{14}$, etwa 30% $C_{16}$, etwa 65% $C_{18}/C_{18}$ ungesättigt), erhitzt die Pigmentsuspension auf 98° C und hält das Gemisch 30 Minuten bei dieser Temperatur. Danach wird zur Fällung der Amine aus ihren Salzen alkalisch gestellt und weitere 60 Minuten auf 98° C erhitzt. Anschließend wird filtriert, neutral gewaschen, der Pigmentpreßkuchen mit 19 Teilen Diäthylentriamin vermischt und bei 90° C getrocknet.

Mit einer so erhaltenen Präparation hergestellte Druckfarben neigen deutlich weniger zum Durchschlagen durch dünne und minderwertige Papiere als Druckfarben, die aus nur mit Fettaminen präparierten Pigmenten hergestellt wurden. Gegenüber Druckfarben auf Basis fettaminpräparierter Pigmente unter Zusatz anorganischer Füllstoffe zeigen die erfindungsgemäß erhaltenen Druckfarben eine höhere Farbstärke und einen deutlich besseren Glanz.

Beispiel 2

110 Teile 1-Acetoacetylaminobenzol werden in 1500 Teilen Wasser und 60 Volumenteilen 33%iger Natronlauge gelöst und nach Zugabe von 6 Gewichtsteilen Oleylaminacetat mit 43 Volumenteilen Eisessig ausgefällt. Anschließend kuppelt man wie in Beispiel 1 beschrieben. Nach beendeter Kupplung gibt man 9 Teile des in Beispiel 1 beschriebenen kationischen Hilfsmittels und 18 Teile des Talgfettalkylpropylendiamins hinzu und arbeitet weiter wie in Beispiel 1 beschrieben. Der Pigmentpreßkuchen wird jedoch mit Wasser angerührt und nach Zugabe von 20 Teilen eines technischen Polyamingemisches 4 Stunden im Rührautoklav auf 115° C erhitzt. Das Amingemisch hatte die folgende Zusammensetzung:

| | |
|---|---|
| 1 — 2% | Äthylendiamin und Wasser |
| 50 — 60% | Diäthylentriamin |
| 15 — 25% | Triäthylentetramin |
| 20 — 25% | Tetraäthylenpentamin |

und höher siedende Produkte.

Eine mit dieser Pigmentpräparation hergestellte Druckfarbe zeigt die gleichen drucktechnischen Eigenschaften wie die Präparation nach Beispiel 1.

**Patentansprüche**

1. Verfahren zur Herstellung von Azopigmentpräparationen mit einem Gehalt an langkettigen aliphatischen primären Aminen und polyfunktionellen Aminen, dadurch gekennzeichnet, daß man vor oder nach der Kupplung ein kationisches Hilfsmittel vom Typ der Phasentransferkatalysatoren und nach der Kupplung dem Kupplungsgemisch ein langkettiges primäres aliphatisches Amin zusetzt und nach dem Abtrennen des Pigments dem Preßkuchen ein Polyamin der Formel

$$H_2N-(C_nH_{2n}-NH)_m-H$$

in der n für gleiche oder verschiedene Zahlen von 2 bis 6 und m für Zahlen von 2 bis 8 stehen, zumischt.

2. Verfahren nach Anspruch 1, dadurch gekennzeichnet, daß man der Kupplungskomponente als Fällungshilfsmittel ein Salz eines langkettigen primären aliphatischen Amins zusetzt.

3. Verfahren nach Anspruch 1 oder 2, dadurch gekennzeichnet, daß man 5 bis 40%, bezogen auf das Pigmentgewicht, des langkettigen primären aliphatischen Amins zusetzt.

4. Verfahren nach Anspruch 1 bis 3, dadurch gekennzeichnet, daß man 8 bis 30%, bezogen auf das Pigmentgewicht, des langkettigen primären aliphatischen Amins zusetzt.

5. Verfahren nach Anspruch 1 bis 4, dadurch gekennzeichnet, daß man 1 bis 15%, bezogen auf das Pigmentgewicht, des Polyamins zusetzt.

6. Verfahren nach Anspruch 1 bis 5, dadurch gekennzeichnet, daß man 3 bis 10%, bezogen auf das Pigmentgewicht, des Polyamins zusetzt.

7. Verfahren nach Anspruch 1 bis 6, dadurch gekennzeichnet, daß man der Kupplungskomponente bis zu 12 Gew.-% des Salzes eines langkettigen primären aliphatischen Amins zusetzt.

8. Verfahren nach Anspruch 1 bis 7, dadurch gekennzeichnet, daß man nach der Kupplung bis zu 8%, bezogen auf das Gewicht des Pigments, eines kationischen Hilfsmittels vom Typ der Phasentransferkatalysatoren zusetzt.

9. Verwendung der nach Anspruch 1 bis 8 erhaltenen Azopigmentpräparationen zur Herstellung von Tiefdruckfarben.

## Claims

1. A process for the preparation of azo pigment preparations having a content of long-chain aliphatic primary amines and polyfunctional amines, which process comprises adding before or after the coupling a cationic auxiliary of the phase transfer catalyst type and after the coupling a long chain primary aliphatic amine to the coupling mixture and, after the separation of the pigment admixing a polyamine of the formula

$$H_2N-(C_nH_{2n}-NH)_m-H$$

in which n represents identical or different numbers from 2 to 6 and m represents numbers from 2 to 8, to the press cake.

2. The process as claimed in claim 1, wherein a salt of a long-chain primary aliphatic amine is added as a precipitation auxiliary to the coupling component.

3. The process as claimed in claim 1 or 2, wherein 5 to 40%, referred to the pigment weight, of the long-chain primary aliphatic amine are added.

4. The process as claimed in claims 1 to 3, wherein 8 to 30%, referred to the pigment weight, of the long-chain primary aliphatic amine are added.

5. The process as claimed in claims 1 to 4, wherein 1 to 15%, referred to the pigment weight, of the polyamine are added.

6. The process as claimed in claims 1 to 5, wherein 3 to 10%, referred to the pigment weight, of the polyamine are added.

7. The process as claimed in claims 1 to 6, wherein up to 12% by weight of the salt of a long-chain primary aliphatic amine are added to the coupling component.

8. The process as claimed in claims 1 to 7, wherein up to 8%, referred to the weight of the pigment, of a cationic auxiliary of the phase transfer catalyst type are added after the coupling.

9. The use of azo pigment preparations obtained as claimed in claims 1 to 8 for the preparation of rotogravure inks.

## Revendications

1. Procédé de préparation de compositions à base de pigments azoïques qui contiennent des amines aliphatiques primaires à longue chaîne et des amines polyfonctionnelles, procédé caractérisé en ce qu'on ajoute au mélange de copulation, avant ou après la copulation, un adjuvant cationique du type des catalyseurs de transfert de phase et, après la copulation, une amine aliphatique primaire à longue chaîne, et, après avoir séparé le pigment, on ajoute au gâteau de filtration une polyamine répondant à la formule:

$$H_2N-(C_nH_{2n}-NH)_m-H$$

dans laquelle m représente un nombre de 2 à 8 et les n représentent des nombres de 2 à 6, identiques ou différents.

2. Procédé selon la revendication 1 caractérisé en ce qu'on ajoute au copulant, comme adjuvant de précipitation, un sel d'une amine aliphatique primaire à longue chaîne.

3. Procédé selon l'une des revendications 1 et 2, caractérisé en ce qu'on ajoute de 5 à 40% en poids, par rapport au pigment, de l'amine aliphatique primaire à longue chaîne.

4. Procédé selon l'une quelconque des revendications 1 à 3, caractérisé en ce qu'on ajoute de 8 à 30% en poids, par rapport au pigment, de l'amine aliphatique à logue chaîne.

5. Procédé selon l'une quelconque des revendications 1 à 4, caractérisé en ce qu'on ajoute de 1 à 15% en poids, par rapport au pigment, de la polyamine.

6. Procédé selon l'une quelconque des revendications 1 à 5, caractérisé en ce qu'on ajoute de 3 à 10% en poids, par rapport au pigment, de la polyamine.

7. Procédé selon l'une quelconque des revendications 1 à 6, caractérisé en ce qu'on ajoute au copulant jusqu'à 12% en poids d'un sel d'une amine aliphatique primaire à longue chaîne.

8. Procédé selon l'une quelconque des revendications 1 à 7, caractérisé en ce que, après la copulation, on ajoute jusqu'à 8% en poids, par rapport au pigment, d'un adjuvant cationique du type des catalyseurs de transfert de phase.

9. Application des compositions à base de pigments azoïques qui ont été obtenues selon l'une quelconque des revendications 1 à 8, à la préparation d'encres pour héliogravure.